# EUROPEAN PATENT APPLICATION

(11) **EP 2 827 235 A1**
(43) Date of publication of application: **21.01.2015**
(21) Application number: 13762019.1
(22) Date of filing: 12.03.2013
(51) Int. Cl.: G06F 3/0488, G06F 3/01, G06F 3/041, G06F 3/048, G09G 5/00

(54) **TERMINAL FOR ELECTRONIC BOOK CONTENT REPLAY AND ELECTRONIC BOOK CONTENT REPLAY METHOD**

(30) Priority: 16.03.2012 JP 2012060993
(71) Applicant: NTT DOCOMO, INC., Chiyoda-ku Tokyo 100-6150 (JP)
(72) Inventor: GAO Hongyan, Tokyo 100-6150 (JP)
(74) Representative: Beder, Jens
(86) International application number: PCT/JP2013/056778
(87) International publication number: WO 2013/137239

(57) **Abstract**

Terminal (1) for playing electronic book content includes vibration generation elements (17) that are subdivided and arranged along display screen (16a) of touch panel (16), vibration generation unit (18) that supplies an electrical signal to the vibration generation elements (17) to generate vibration, page position detection unit (20) that detects a page position of a page image of electronic book content displayed on the display screen (16a), contact detection unit (13), contact range calculation unit (19) and movement state calculation unit (21) that detect a page turning manipulation for the page image in a manipulation position on the display screen (16a), and vibration control unit (22) that performs control to vibrate the vibration generation element (17) corresponding to the manipulation position at a strength corresponding to the page position of the page image when the page turning manipulation is detected.

## Description

### Technical Field

The present invention relates to a terminal for playing electronic book content and an electronic book content playing method in which electronic book content is played.

### Background Art

A function of receiving and playing electronic book content has been conventionally provided in an information terminal, such as a mobile phone terminal, a smartphone, a PDA (Personal Digital Assistant), or a personal computer. For example, a function of enabling display content to be searched for while pages are turned in a terminal device that displays electronic data in units of pages is disclosed in Patent Literature 1 below. According to such a function, a position in which a mouse button is pressed and a position in which the mouse button is released within a thickness of the pages are detected, and the number of pages to be turned up and an area in which the pages are turned up and displayed are calculated according to the positions. Further, according to this function, each time it is detected that a pointer passes through a border line between adjacent pages in the thickness part of the turned up pages, the pages are displayed to be turned down.

### Citation List

### Patent Literature

[Patent Literature 1] Japanese Patent Laid-Open No. 2003-157134

### Summary of Invention

### Technical Problem

However, although the search of the page of the electronic book content is realized according to the conventional function of displaying electronic book content described above, a sense of using a real book of a print is not sufficiently reproduced and a difference between a sense of a page turning manipulation of the electronic book by a user and a sense of using a real book is great. As a result, the number of re-manipulations when page search is performed tends to increase.

Therefore, the present invention has been made in view of such problems, and an object of the present invention is to provide a terminal for playing electronic book content and an electronic book content playing method that are capable of causing a sense of a page turning manipulation by a user to be sufficiently close to a sense of using a real book, and effectively improving operability.

### Solution to Problem

In order to solve the problems described above, a terminal for playing electronic book content according to an aspect of the present invention includes a plurality of vibration generation elements that are subdivided and arranged along a display screen of a touch panel and give vibration of a strength corresponding to an electrical signal to the display screen according to the electrical signal; a vibration generation means that supplies the electrical signal to the plurality of vibration generation elements to generate the vibration; a page position detection means that detects a page position of a page image of electronic book content displayed on the display screen; a manipulation detection means that detects a page turning manipulation for the page image by a user in a manipulation position on the display screen; and a vibration control means that controls the vibration generation means to vibrate the vibration generation element arranged in a position corresponding to the manipulation position at strength corresponding to the page position of the page image when the page turning manipulation is detected.

Further, an electronic book content playing method according to another aspect of the present invention is an electronic book content playing method using a terminal for playing electronic book content including a plurality of vibration generation elements that are subdivided and arranged along a display screen of a touch panel and give vibration of a strength corresponding to an electrical signal to the display screen according to the electrical signal, and a vibration generation means that supplies the electrical signal to the plurality of vibration generation elements to generate the vibration, the method including: a page position detection step for detecting, by a page position detection means, a page position of a page image of electronic book content displayed on the display screen; a manipulation detection step for detecting, by a manipulation detection means, a page turning manipulation for the page image by a user in a manipulation position on the display screen; and a vibration control step for controlling, by a vibration control means, the vibration generation means to vibrate the vibration generation element arranged in a position corresponding to the manipulation position at a strength corresponding to the page position of the page image when the page turning manipulation is detected.

According to the terminal for playing electronic book content or the electronic book content playing method as described above, the page positions of the page images of the electronic book displayed on the display screen of the touch panel are detected, the page turning manipulation in the manipulation position in the page images on the display screen by the user is detected, and control is performed so that the display screen of the part corresponding to the manipulation position vibrates at a strength corresponding to the page position according to the detection of the manipulation. Accordingly, it is possible to give the user a manipulation sense close to a manipulation sense at the time of page turning of a real book, and sufficiently improve page turning operability. As a result, it is possible to prevent an erroneous manipulation at the time of page turning manipulation of the electronic book.

The manipulation detection means may detect a page turning manipulation by detecting movement of the contact position by the user in an end portion of the page image on the display screen. Thus, it is possible to match a timing of displaying of the page turning operation on the display screen with a timing of the page turning operation in a real book and to further improve the page turning operability.

Further, the manipulation detection means may determine an increase or decrease number of the page position of the page image based on a direction and a distance of the movement of the contact position on the display screen. With such a configuration, it is possible to enable the number of pages of page turning determined by the manipulation of the user to be close to the number of pages by the page turning manipulation of a real book and to further improve the page turning operability.

Furthermore, the vibration control means may control the vibration generation means to vibrate the vibration generation element for a duration or number of times corresponding to the increase or decrease number of the page position determined by the manipulation detection means. In this case, it is possible to give the user a manipulation sense closer to a manipulation sense at the time of page turning of a real book.

Further, the vibration control means may determine a partial area in a range of the contact position based on a direction of the movement of the contact position detected by the manipulation detection means, and control the vibration generation means to vibrate the vibration generation element arranged in a position corresponding to the partial area. Thus, the position on the display screen of the vibration given to the user is close to the position at the time of page turning of a real book, and it is possible to give the user a manipulation sense much closer to a manipulation sense at the time of page turning of a real book.

### Advantageous Effects of Invention

According to the present invention, it is possible to cause the sense of the page turning manipulation by the user to be sufficiently close to the sense when a real book is used, and effectively improve the operability.

### Brief Description of Drawings

Fig. 1 is a diagram illustrating a schematic configuration of a terminal for playing electronic book content according to one preferred embodiment of the present invention.
Fig. 2 is a plan view illustrating a configuration of a touch panel 16 and a vibration generation element 17 of Fig. 1.
Fig. 3 is a diagram illustrating a book image G₁ displayed on a display screen 16a by a display control unit 15 of Fig. 1.
Fig. 4 is a diagram illustrating a book image G₁ displayed on the display screen 16a by the display control unit 15 of Fig. 1.
Fig. 5 is a diagram illustrating a data structure of control state information stored in a detection data storage unit 14 of Fig. 1.
Fig. 6 is a flowchart illustrating an operation at the time of content play in a terminal 1 for playing electronic book content of Fig. 1.

Fig. 7 is a diagram illustrating a book image G₂ displayed on the display screen 16a according to an alternative example of the present invention.

### Description of Embodiments

Hereinafter, preferred embodiments of a terminal for playing electronic book content and an electronic book content playing method according to the present invention will be described in detail with reference to the drawings. Further, the same elements are denoted with the same reference signs in the description of the drawings and repeated description is omitted.

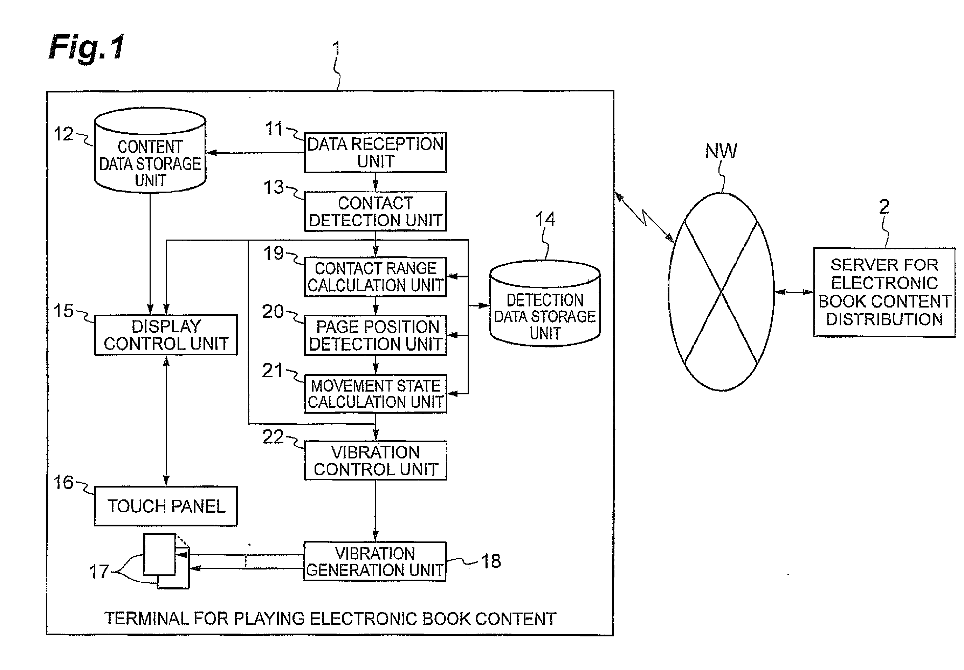

Fig. 1 is a diagram illustrating a schematic configuration of a terminal 1 for playing electronic book content according to one preferred embodiment of the present invention. The terminal 1 for playing electronic book content illustrated in Fig. 1 is a terminal device represented by a mobile phone terminal, a smartphone, a PDA, a personal computer, a game console, or the like, and can perform data communication with a server 2 for electronic book content distribution through a communication network NW including a mobile communication network adopting a mobile communication scheme, a cable communication network, or the like.

This terminal 1 for playing electronic book content is an information communication terminal having a function of receiving electronic book content from the server 2 for electronic book content distribution via the communication network NW and playing a book image including a page image represented by the electronic book content, and includes a data reception unit 11, a content data storage unit 12, a contact detection unit (a manipulation detection means) 13, a detection data storage unit 14, a display control unit (the manipulation detection means) 15, a touch panel 16, vibration generation elements 17, a vibration generation unit (a vibration generation means) 18, a contact range calculation unit 19, a page position detection unit (a page position detection means) 20, a movement state calculation unit (the manipulation detection means) 21, and a vibration control unit (a vibration control means) 22 as physical or functional components.

First, a configuration or a function of each component of the terminal 1 for playing electronic book content will be described in detail.

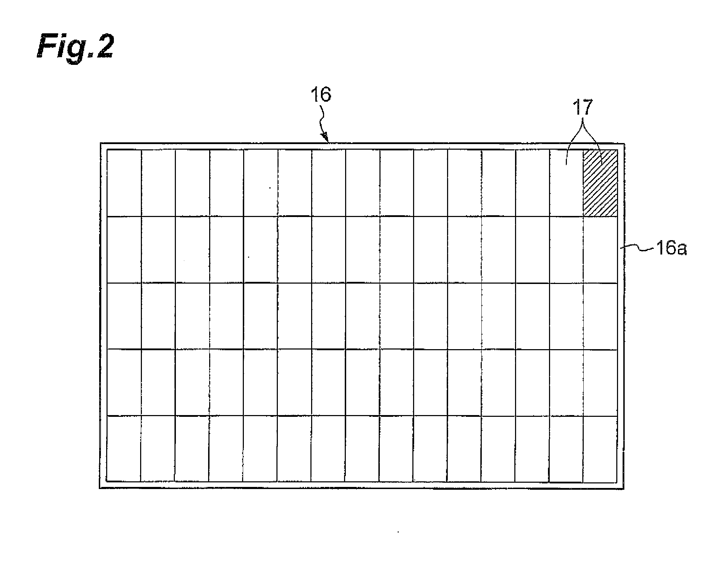

The touch panel 16 is provided in the terminal 1 for playing electronic book content as a display screen displaying the image represented by the image data stored in the content data storage unit 12. Further, the plurality of vibration generation elements 17 subdivided and arranged to cover substantially the entire surface of the display screen 16a are provided along an inner side of the display screen 16a of the touch panel 16 near the touch panel 16, as illustrated in Fig. 2. With such a configuration, vibration can be given to each subdivided area of the display screen 16a. A planar piezoelectric element driven by an electrical signal supplied from the outside and vibrating at various strengths and frequencies according to a waveform of the electrical signal is preferably used as the vibration generation element 17. A shape along the display screen 16a of each vibration generation element 17 may be set to various shapes. However, when a target of detection by the touch panel 16 is assumed to be a finger of the user, the shape may be set to a rectangular shape having substantially an area 1/3 of an average contact area of the finger with the display screen 16a and having substantially the same aspect ratio as the display screen 16a.

Referring back to Fig. 1, the vibration generation unit 18 is a circuit unit electrically connected to a plurality of vibration generation elements 17, and selectively supplying the electrical signal having various waveforms to the vibration generation element 17 to drive the vibration generation element 17 arranged in a specific place. This vibration generation unit 18 is configured to be able to vibrate the predetermined vibration generation element 17 selected from among the plurality of vibration generation elements 17 with a predetermined strength, a predetermined duration and a predetermined frequency under control of the vibration control unit 22. For example, the vibration generation unit 18 can change the strength of the vibration by changing voltage amplitude of the electrical signal, can change the duration of the vibration by changing the duration of the electrical signal, and can change the frequency of the vibration by changing a frequency of the electrical signal.

The data reception unit 11 receives electronic book content (hereinafter simply referred also to as "content") via the communication network NW and stores the received content in the content data storage unit 12. Specifically, the data reception unit 11 has a function of receiving a reception instruction input through the touch panel 16 from a user, and receiving desired content from the server 2 for electronic book content distribution in response to the reception instruction input.

The contact detection unit 13 detects a manipulation on the display screen 16a of the touch panel 16 by the user. Specifically, the contact detection unit 13 detects a contact position on the display screen 16a of a finger of the user. Also, the contact detection unit 13 delivers data indicating the contact position detected on the display screen 16a to the display control unit 15, the contact range calculation unit 19, the page position detection unit 20, and the movement state calculation unit 21.

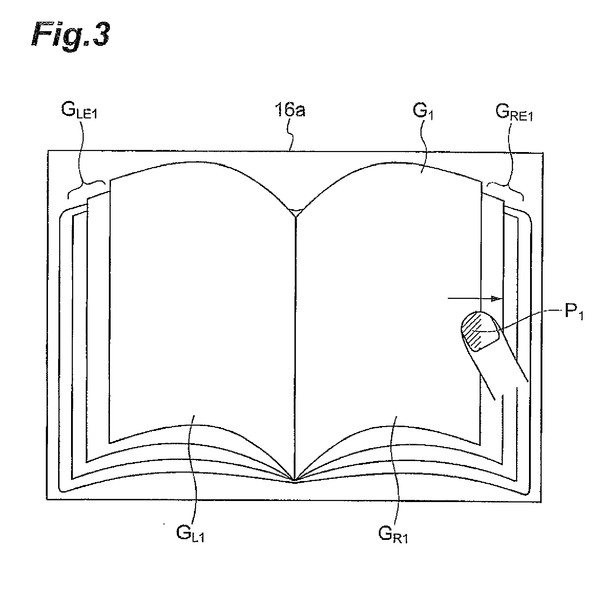

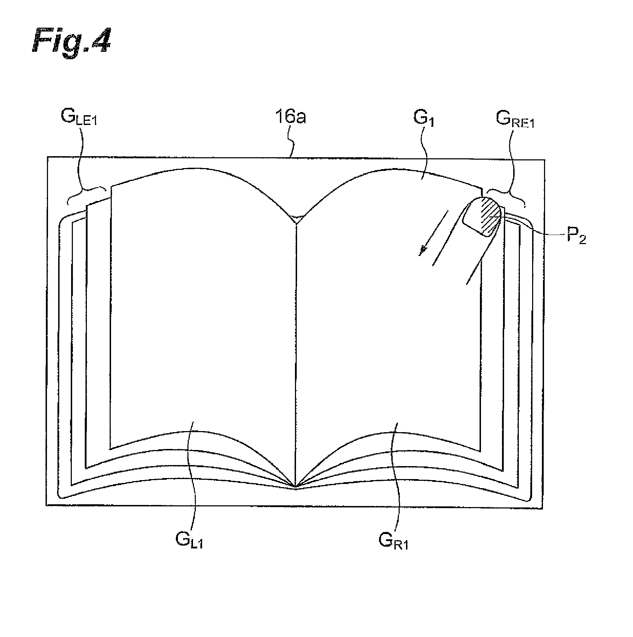

The display control unit 15 performs control to display the book image indicated by the content stored in the content data storage unit 12 on the display screen 16a when contact in a predetermined position (e.g., a position of a displayed button image) on the display screen 16a is detected by the contact detection unit 13. A book image G₁ displayed on the display screen 16a by the display control unit 15 is illustrated in Figs. 3 and 4. As illustrated in Figs. 3 and 4, a right spread page image G_{R1} and a left spread page image G_{L1} are connected and displayed as the book image G₁. Further, a page end image G_{RE1} indicating an image of end portions of the pages interposed between the page of the page image G_{R1} and a cover is displayed in a right end of the right spread page image G_{R1}, and a page end image G_{LE1} indicating an image of end portions of the pages interposed between the page of the page image G_{L1} and the cover is displayed in a left end of the left spread page image G_{L1}.

Further, the display control unit 15 performs control so that a page turning action in the book image is played when a page turning manipulation in the page end image G_{RE1} or the page end image G_{LE1} is detected by the contact detection unit 13. In other words, when it is detected that the contact position is moved right in the page end image G_{RE1} corresponding to a page turning manipulation position, the display control unit 15 controls display so that the page displayed to be superimposed on the page end image G_{RE1} is turned to the spread page image G_{L1} in an order from a page displayed in the top of the spread page image G_{R1} to a page superimposed on a lower layer portion (Fig. 3). Similarly, when it is detected that the contact position is moved left in the page end image G_{RE1} corresponding to the page turning manipulation position, the display control unit 15 controls display so that the page displayed to be superimposed on the page end image G_{RE1} is turned to the spread page image G_{L1} (Fig. 4). In this case, the display control unit 15 determines the number of pages to perform the page turning based on a lateral movement distance of the contact position. On the other hand, when it is detected that the contact position is moved right or left in the page end image G_{RE1} corresponding to the page turning manipulation position, the display control unit 15 controls display so that the page displayed to be superimposed on the page end image G_{LE1} is turned to the spread page image G_{R1} in an order from a page displayed in the top of the spread page image G_{L1} to a page superimposed on a lower layer portion. Further, the display control unit 15 stores control state information indicating a control state of the book image G₁ of a display control target in the detection data storage unit 14.

When the page turning manipulation is detected while the book image G₁ is being displayed by the display control unit 15, the contact range calculation unit 19 calculates a contact range of the finger of the user in the book image G₁ based on the data output from the contact detection unit 13. Also, the contact range calculation unit 19 stores a value indicating the calculated contact range in the detection data storage unit 14 in association with information that identifies the content corresponding to the displayed book image G₁.

When the page turning manipulation is detected while the book image G₁ is being displayed by the display control unit 15, the page position detection unit 20 detects a total number of pages of the book image G₁ and page positions of the spread page images G_{R1} and G_{L1}. Also, the page position detection unit 20 stores detected information in the detection data storage unit 14 in association with the information that identifies the content corresponding to the book image G1. For example, the page position detection unit 20 detects the number of pages including a page displayed in the top of the spread page images G_{R1} and G_{L1} and pages superimposed on a lower layer portion of such a page as the information indicating the page positions of the spread page images G_{R1} and G_{L1}.

When the page turning manipulation is detected while the book image G₁ is being displayed by the display control unit 15, the movement state calculation unit 21 detects a movement direction and a movement distance of the contact position of the user in the page end images G_{RE1} and G_{LE1} based on the data output from the contact detection unit 13. Further, the movement state calculation unit 21 determines the number of pages of page turning controlled by the display control unit 15 based on the detected movement direction and the detected movement distance. Specifically, when it is detected that the contact position is moved in a lateral direction in the page end image G_{RE1}, the movement state calculation unit 21 determines an increase or decrease number of the page position from the spread page image G_{R1} to the spread page image G_{L1} based on a numerical value corresponding to the movement distance of the contact position in the lateral direction. Further, when it is detected that the contact position is moved in a lateral direction in the page end image G_{LE1}, the movement state calculation unit 21 determines an increase or decrease number of the page position from the spread page image G_{L1} to the spread page image G_{R1} based on a numerical value corresponding to the movement distance of the contact position in the lateral direction. Also, the movement state calculation unit 21 stores a value indicating the determined number of pages of page turning in the detection data storage unit 14 in association with the information that identifies the content corresponding to the displayed book image G₁.

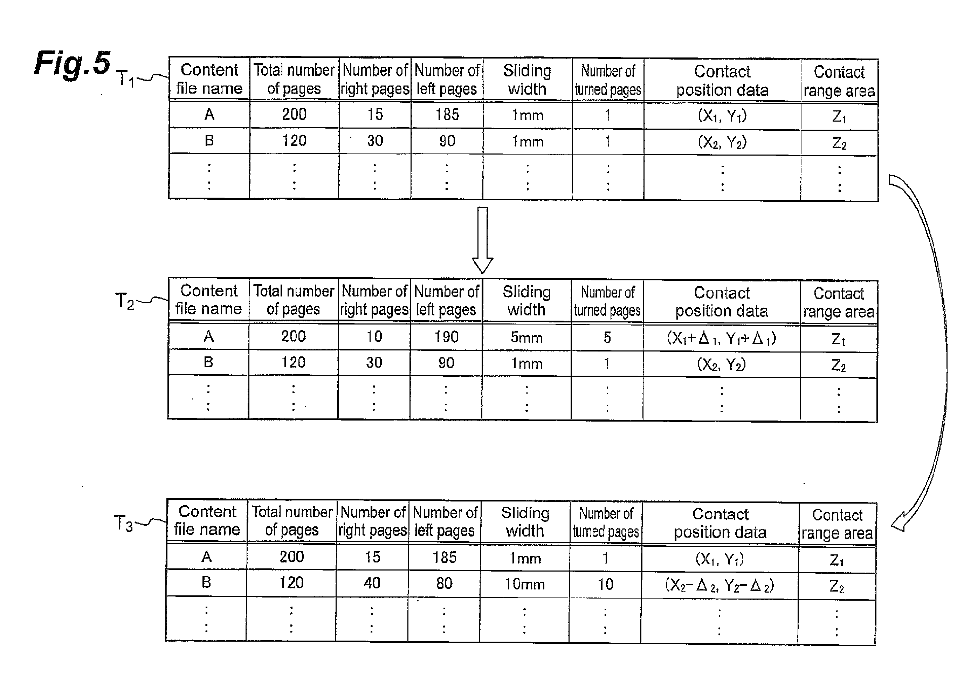

A data structure of the control state information stored in the detection data storage unit 14 by the display control unit 15, the contact range calculation unit 19, the page position detection unit 20 and the movement state calculation unit 21 is illustrated in Fig. 5. In table data T₁ shown in Fig. 5, a total number "200" of pages of the book represented by the book image G₁, the number "15" of pages displayed to be superimposed on the spread page image G_{R1}, the number "185" of pages displayed to be superimposed on the spread page image G_{L1}, "a sliding width: 1 mm" indicating the lateral movement distance of the contact position at the time of the page turning manipulation, the number "1" of pages of page turning determined in response thereto, and "contact position data: (X₁, Y₁)" and "contact range area: Z₁" indicating the contact range at the time of the page turning manipulation are stored as the control state information indicating a display control state for content identified by a content file name "A" in association with the content file name "A." Further, the control state information included in this table data T₁ is updated with the information on which the page turning manipulation is reflected each time the page turning manipulation is detected. In Fig. 5, examples of table data T₂ and T₃ after the information update are also shown together. Specifically, a state in which update is performed from the table data T₁ to the table data T₂ when a page turning manipulation of a movement distance "5 mm" in the right direction in the page end image G_{RE1} as illustrated in Fig. 3 is detected in a state in which the content identified by the content file name "A" is played is shown. Further, a state in which update is performed from the table data T₁ to the table data T₃ when a page turning manipulation of a movement distance "10 mm" in the left direction in the page end image G_{RE1} as illustrated in Fig. 4 is detected in a state in which content identified by a content file name "B" is played is shown.

When the page turning manipulation is detected by the display control unit 15, the vibration control unit 22 controls the vibration generation unit 18 to vibrate the vibration generation element 17 arranged in a position corresponding to the manipulation position at that time at vibration strength corresponding to a page position in the top of the spread page images G_{R1} and G_{L1}.

In other words, when the page turning manipulation is detected, the vibration control unit 22 refers to the detection data storage unit 14 to refer to the control state information relating to the content corresponding to the book image displayed at that time. Also, the vibration control unit 22 determines the partial area in the contact range based on the contact range indicated by the referred control state information and performs control to vibrate the vibration generation element 17 in a position corresponding to the partial area. Specifically, the vibration control unit 22 vibrates the vibration generation element 17 in a position corresponding to a one-third range (partial area) on the left side in the contact range when the movement of the contact position in the right direction in the page end image G_{RE1} is detected, and vibrates the vibration generation element 17 in a position corresponding to a one-third range (partial area) on the right side in the contact range when the movement of the contact position in the left direction in the page end image G_{RE1} is detected. Further, the vibration control unit 22 vibrates the vibration generation element 17 in a position corresponding to a one-third range (partial area) on the right side in the contact range when the movement of the contact position in the right direction in the page end image G_{LE1} is detected, and vibrates the vibration generation element 17 in a position corresponding to a one-third range (partial area) on the left side in the contact range when the movement of the contact position in the left direction in the page end image G_{LE1} is detected. Here, when a plurality of vibration generation elements 17 extend over the partial area, the vibration control unit 22 performs control to vibrate the vibration generation element 17 having the greatest area to cover the partial area.

Further, in this case, the vibration control unit 22 sets the vibration strength to strength corresponding to the number of pages superimposed on the page end images G_{RE1} and G_{LE1} from which the page turning has been detected. For example, when the number of pages displayed to be superimposed on the spread page image G_{R1} when the page turning manipulation for the page end image G_{RE1} is detected is "15," the vibration control unit 22 sets the vibration strength to vibration strength corresponding to the number "15" of pages. For example, a set value of the vibration strength is set to a value obtained by multiplying a ratio of the number of pages to a total number of pages by a maximum value, which is vibration strength corresponding to the total number of pages of the book. Alternatively, the set value of the vibration strength may be set to a value obtained by multiplying the number of pages by a minimum value, which is vibration strength for the number "1" of pages.

Further, when the page turning manipulation is detected, the vibration control unit 22 controls the vibration generation unit 18 to vibrate the vibration generation element 17 the number of times or for the duration corresponding to an increase or decrease number of the page position of the page turning manipulation.

In other words, the vibration control unit 22 controls, to the vibration generation element 17, the vibration generation unit 18 to supply an electrical signal for the number of times corresponding to the number of pages of page turning calculated from the movement distance of the contact position by the movement state calculation unit 21 according to the number of pages. Accordingly, vibration is given to the touch panel 16 at the number of times corresponding to the number of pages of page turning by the vibration generation element 17. In this case, the vibration control unit 22 sets a supply timing of the electrical signal to synchronize an image operation of page turning on the display screen 16a by the display control unit 15 and a vibration operation of the vibration generation element 17.

Or, the vibration control unit 22 may control the vibration generation unit 18 to vibrate the vibration generation element 17 for a duration corresponding to the number of pages of page turning according to the number of pages. Specifically, when "0.5 seconds" is assumed to be required for an image manipulation for page turning of one page, the vibration control unit 22 calculates time by multiplying the number of pages of page turning by "0.5 seconds" required for an image operation of one page and controls the vibration generation unit 18 to vibrate the vibration generation element 17 for a duration of that time. In this case, the vibration control unit 22 sets the frequency of the vibration in the vibration generation element 17 to 1/0.5 (seconds) = 2 Hz that is a reciprocal of the time required for an image manipulation for one page so that the vibration generation element 17 vibrates once per "0.5 seconds" that is the time required for an image manipulation for one page.

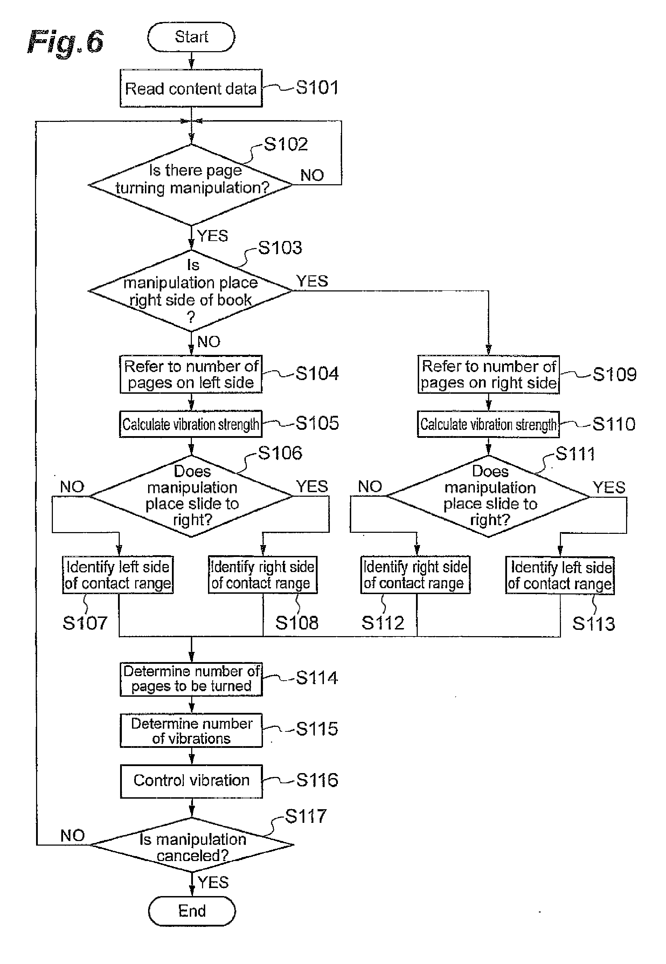

Hereinafter, an operation of the terminal 1 for playing electronic book content will be described with reference to Fig. 6 and an electronic book content playing method in the terminal 1 for playing electronic book content will be described in detail. Fig. 6 is a flowchart illustrating an operation at the time of content play in the terminal 1 for playing electronic book content.

First, when a content output instruction is received from the user of the terminal 1 for playing electronic book content through the touch panel 16, content is read from the content data storage unit 12 and output to the display screen 16a by the display control unit 15 (step S101; Figs. 3 and 4). Also, it is repeatedly determined whether a page turning manipulation in the page end images G_{RE1} and G_{LE1} displayed on the display screen 16a is detected by the contact detection unit 13 (step S102). When it is determined that the page turning manipulation is detected (step S102; YES), it is determined by the movement state calculation unit 21 whether a place from which the page turning manipulation is detected is the right page end image G_{RE1} (step S103).

As a result, when the page turning manipulation is detected in the right page end image G_{RE1} (step S103; YES), the control state information is referred to from the detection data storage unit 14 by the vibration control unit 22 and accordingly the number of pages displayed to be superimposed on the right page end image G_{RE1} is referred to (step S109). Also, the vibration strength is calculated based on the number of pages by the vibration control unit 22 (step S110). It is then determined whether the movement direction of the contact position at the time of the page turning manipulation is the right direction by the movement state calculation unit 21 (step S111). When it is determined that the movement direction of the contact position is the right direction as a result of the determination (step S111; YES), a partial area P₁ is identified in the left side in a contact range by the vibration control unit 22 (step S113; Fig. 3). On the other hand, when it is determined that the movement direction of the contact position is the left direction (step S111; NO), a partial area P₂ is identified in the right side in the contact range by the vibration control unit 22 (step S 112; Fig. 4).

When the page turning manipulation is detected in the left page end image G_{LE1} as a result of the determination in step S103 (step S103; NO), the control state information is referred to from the detection data storage unit 14 by the vibration control unit 22, and accordingly the number of pages displayed to be superimposed on the left page end image G_{LE1} is referred to (step S104). Also, the vibration strength is calculated based on the number of pages by the vibration control unit 22 (step S105). It is then determined whether the movement direction of the contact position at the time of the page turning manipulation is the right direction by the movement state calculation unit 21 (step S106). When it is determined that the movement direction of the contact position is the right direction as a result of the determination (step S106; YES), a partial area is identified in the right side in the contact range by the vibration control unit 22 (step S108). On the other hand, when it is determined that the movement direction of the contact position is the left direction (step S106; NO), the partial area is identified in the left side in the contact range by the vibration control unit 22 (step S107).

Next, the movement direction and the movement distance of the contact position at the time of the page turning manipulation are detected and the number of pages of page turning are determined based on the movement direction and the movement distance by the movement state calculation unit 21 (step S114). The number of vibrations is then determined to be the number of times corresponding to the number of pages of page turning by the vibration control unit 22

(step S115). Also, the vibration generation unit 18 is controlled to vibrate the vibration generation element 17 in a position corresponding to the partial area at the set vibration strength and the set number of vibrations by the vibration control unit 22 (step S116). Then, it is determined by the contact detection unit 13 whether a content output cancellation instruction is received from the user (step S117). When the output cancellation instruction is not received (step S 117; NO), the process returns to step S102, and when the output cancellation instruction is received (step S117; YES), the content output process ends.

According to the terminal 1 for playing electronic book content and the electronic book content playing method in the terminal 1 for playing electronic book content described above, the page positions of the spread page images G_{R1} and G_{L1} of the electronic book displayed on the display screen 16a of the touch panel 16 are detected, the page turning manipulation in the page end images O_{RE1} and G_{LE1} in the spread page images G_{R1} and G_{L1} on the display screen 16a by the user is detected, and control is performed so that the display screen 16a of the part corresponding to the manipulation position vibrates at strength corresponding to the page position according to the detection of the manipulation. Accordingly, it is possible to give a manipulation sense close to a manipulation sense at the time of page turning of a real book to the user, and sufficiently improve page turning operability. As a result, it is possible to prevent an erroneous manipulation at the time of page turning manipulation of the electronic book.

Further, since the page turning manipulation is detected by detecting the movement of the contact position by the user in the page end images G_{RE1} and G_{LE1} on the display screen 16a, it is possible to match a timing of displaying of the page turning operation on the display screen 16a with a timing of the page turning operation in a real book and to further improve the page turning operability. Further, since the increase or decrease number of the page position of the spread page image G_{R1} and G_{L1} is determined based on the direction and the distance of the movement of the contact position on the display screen 16a, it is possible to enable the number of pages of page turning determined by the manipulation of the user to be close to the number of pages by the page turning manipulation of a real book and to further improve the page turning operability. Further, since control is performed so that the display screen 16a vibrates for the duration or the number of times corresponding to the increase or decrease number of the page position of the spread page images G_{R1} and G_{L1}, it is possible to give the user a manipulation sense closer to a manipulation sense at the time of page turning of a real book.

Further, since the partial area in the range of the contact position is determined according to the direction of the movement of the contact position detected on the display screen 16a and the control is performed so that the display screen 16a vibrates in a position corresponding to the partial area, a manipulation sense given to the user is close to a sense at the time of page turning of a real book. Specifically, one of a turning manipulation with an index finger and a pressing manipulation with a thumb is selected at the time of a real page turning manipulation. Further, sliding directions of the index finger and the thumb are different according to whether a place of a page turning manipulation target is a right end portion or a left end portion of the book. According to the present embodiment, either of the right side and the left side of the finger can be appropriately set as a place to which the vibration is to be given according to a place to which a page jumps and the vibration is given at the time of real manipulation.

Further, the present invention is not limited to the embodiments described above.

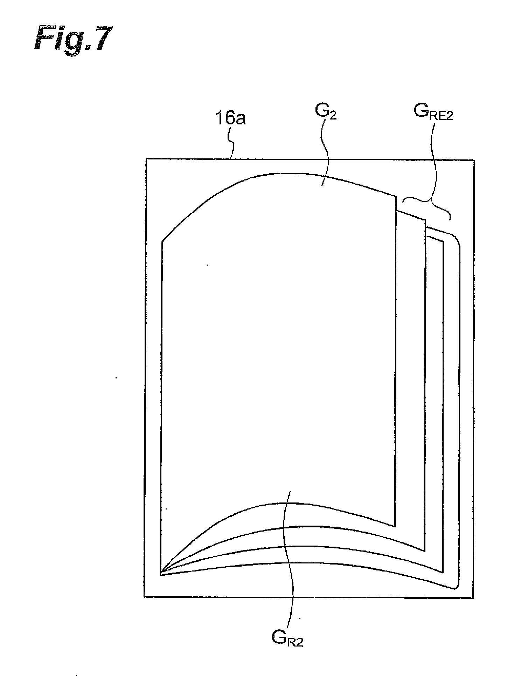

For example, the book image of the content read and played from the content data storage unit 12 may be an image G₂ only including one spread page image G_{R2}, as illustrated in Fig. 7. In this case, a page turning manipulation in the page end image G_{RE2} is detected and control is performed so that a display screen 16a in a place corresponding to the manipulation position vibrates at a strength corresponding to a page position of the spread page image G_{R2} and a number of times corresponding to the number of pages of page turning, as in the embodiment described above.

### Industrial Applicability

The present invention is used as the terminal for playing electronic book content and the electronic book content playing method, and can enable a page turning manipulation sense by the user to be sufficiently close to a sense when a real book is used, and effectively improve operability.

### Reference Signs List

1 ... Terminal for playing electronic book content, 13 ... Contact detection unit (manipulation detection means), 16 ... Touch panel, 16a ... Display screen, 17 ... Vibration generation element, 18 ... Vibration generation unit (vibration generation means), 19 ... Contact range calculation unit (manipulation detection means), 20 ... Page position detection unit (page position detection means), 21 ... Movement state calculation unit (manipulation detection means), 22 ... Vibration control unit (vibration control means), G₁, G₂ ... Book image picture, G_{R1}, G_{L1}, G_{R2} ... spread page image, G_{LE1}, G_{RE1}, G_{RE2} ... Page end image.

## Claims

1. A terminal for playing electronic book content **characterized by** comprising:
a plurality of vibration generation elements that are subdivided and arranged along a display screen of a touch panel and give vibration of a strength corresponding to an electrical signal to the display screen according to the electrical signal;
a vibration generation means that supplies the electrical signal to the plurality of vibration generation elements to generate the vibration;
a page position detection means that detects a page position of a page image of electronic book content displayed on the display screen;
a manipulation detection means that detects a page turning manipulation for the page image by a user in a manipulation position on the display screen; and
a vibration control means that controls the vibration generation means to vibrate the vibration generation element arranged in a position corresponding to the manipulation position at a strength corresponding to the page position of the page image when the page turning manipulation is detected.

2. The terminal for playing electronic book content according to claim 1, **characterized in that** the manipulation detection means detects a page turning manipulation by detecting movement of the contact position by the user in an end portion of the page image on the display screen.

3. The terminal for playing electronic book content according to claim 2, **characterized in that** the manipulation detection means determines an increase or decrease number of the page position of the page image based on a direction and a distance of the movement of the contact position on the display screen.

4. The terminal for playing electronic book content according to claim 3, **characterized in that** the vibration control means controls the vibration generation means to vibrate the vibration generation element for a duration or a number of times corresponding to the increase or decrease number of the page position determined by the manipulation detection means.

5. The terminal for playing electronic book content according to any one of claims 2 to 4, **characterized in that** the vibration control means determines a partial area in a range of the contact position based on a direction of the movement of the contact position detected by the manipulation detection means, and controls the vibration generation means to vibrate the vibration generation element arranged in a position corresponding to the partial area.

6. An electronic book content playing method using a terminal for playing electronic book content including a plurality of vibration generation elements that are subdivided and arranged along a display screen of a touch panel and give vibration of a strength corresponding to an electrical signal to the display screen according to the electrical signal, and a vibration generation means that supplies the electrical signal to the plurality of vibration generation elements to generate the vibration, the method **characterized by** comprising:
a page position detection step for detecting, by a page position detection means, a page position of a page image of electronic book content displayed on the display screen;
a manipulation detection step for detecting, by a manipulation detection means, a page turning manipulation for the page image by a user in a manipulation position on the display screen; and
a vibration control step for controlling, by a vibration control means, the vibration generation means to vibrate the vibration generation element arranged in a position corresponding to the manipulation position at a strength corresponding to the page position of the page image when the page turning manipulation is detected.
